# EUROPEAN PATENT SPECIFICATION

(11) **EP 4 537 670 B1**
(45) Date of publication and mention of the grant of the patent: **21.10.2026**
(21) Application number: 23834667.0
(22) Date of filing: 27.06.2023
(51) Int. Cl.: A23G 3/42, A23L 29/231, A23L 29/238, A23L 29/256, A23L 29/269, A23L 33/10

(54) **VEGETABLE GUM-BASED SOFT JELLY CANDY AND PRODUCTION METHOD THEREFOR**
WEICHE GELEE-ZUCKER AUF PFLANZLICHER GUMMIBASIS UND HERSTELLUNGSVERFAHREN DAFÜR
BONBON GÉLIFIÉ MOU À BASE DE GOMME VÉGÉTALE ET SON PROCÉDÉ DE PRODUCTION

(30) Priority: 07.07.2022 CN 202210794358
(43) Date of publication of application: 16.04.2025
(73) Proprietor: SIRIO HEALTHCARE (ANHUI) CO., LTD., Maanshan, Anhui 243099 (CN)
(72) Inventor: YU, Ziping, Maanshan, Anhui 243099 (CN); CUI, Alan, Maanshan, Anhui 243099 (CN); YANG, Mengdan, Maanshan, Anhui 243099 (CN)
(74) Representative: Cabinet Becker et Associés
(86) International application number: PCT/CN2023/102820
(87) International publication number: WO 2024/007899

(56) References cited:
- CN-A- 112 655 804
- CN-A- 113 575 738
- CN-A- 113 712 190
- CN-A- 114 258 976
- CN-A- 115 191 505
- JP-A- 2006 025 741
- US-A1- 2001 036 499

## Description

### TECHNICAL FIELD OF THE INVENTION

The present disclosure relates to the field of food, particularly soft candy food processing technology. Specifically, the disclosure relates to a vegetable gum-based soft jelly candy and a preparation method thereof.

### BACKGROUND

As a snack food, a soft jelly candy is deeply loved by consumers. A gelatin soft candy is a major category of soft jelly candies and is very popular in the market due to its higher elasticity and chewiness. However, the poor thermal stability and a large addition amount of gelatin, and its single taste still limit the production and sales of the gelatin soft candy. In recent years, with the popularity of pure natural and vegetarian concepts, the vegetable gum-based soft jelly candy has attracted widespread attention in markets of the developed countries such as Europe and the United States, becoming a new consumption fashion for soft jelly candies.

The vegetable gum-based soft jelly candy has the following major advantages over a gelatin-based soft jelly candy:
· suitable for special dietary requirements (halal and/or kosher food);
· providing a wide range of textures, from hard to soft, from brittle to elastic textures;
· with a less addition amount, which is about half of the usage amount of the gelatin; and
· having shelf life stabilities, including temperature resistance and texture stability.

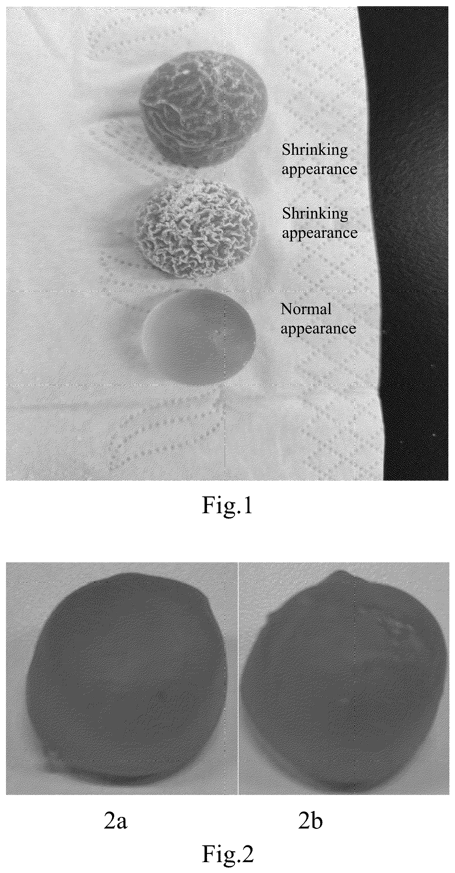

Due to the above advantages of a vegetable gum, the vegetable gum has become a good carrier for health-care raw materials or healthy raw materials. A jelly system is an essential part of a soft jelly candy. Candies made with different jelly systems have different physical, chemical and sensory properties. A jelly system commonly used in a vegetable gum-based soft jelly candy currently on the market mainly includes modified starch, pectin and carrageenan etc. However, there are some issues in current vegetable gum-based soft jelly candy products, among which the most prominent issue is that they are prone to "shrinkage" (specifically, the texture is destroyed, like shrinkage and damage to a sponge, see Fig. 1) during the shelf life. This issue is particularly serious for vegetable gum-based soft jelly candies containing a high content of functional ingredients (≥ 1% by weight of functional vitamins, minerals, oils, etc.). In addition, the "shrinkage" phenomenon in the current vegetable gum-based soft jelly candies comprising sugar alcohols is also particularly serious.

CN112401045A relates to a preparation method of a vegetable gum type soft jelly candy, which is designed to address the issue of the larger hardness and brittleness of the carrageenan gum base, which are not able to provide sufficient elasticity and chewiness, and may result in the issue of syneresis or water seepage and deterioration of the soft candy. CN112401045A addresses the above issues by utilizing a gum sugar powder including 2.4-4.0 parts by weight of κ-carrageenan, 0-1.6 parts by weight of CMC and 40-60 parts by weight of sugar. However, this patent application cannot be sugar-free/low-sugar, nor can it achieve a high content of functional ingredients (≥1% of functional vitamins, minerals, oils, etc.), and therefore does not solve the problem of "shrinkage" of a vegetable gum-based soft jelly candy containing sugar alcohols and a vegetable gum-based soft jelly candy containing a high content of functional ingredients. CN113712190A discloses a composite gelling agent aimed at overcoming the drawbacks arising from the individual use of gelling agents in soft candies. The composite gelling agent is prepared from the following raw materials in parts by weight:0.1-0.5 part of high-ester pectin, 0.1-0.2 part of locust bean gum, 0.1-0.3 part of xanthan gum, 0.1-1.5 parts of carrageenan, 0.1-0.3 part of gellan gum, 0.1 part of tara gum, 0.1-10 parts of gelatin, 0.1-2 parts of agar, and 20-60 parts of drinking water.

Therefore, there is still a need for vegetable gum-based soft jelly candy products with good product appearance stability and texture.

### SUMMARY OF THE INVENTION

The Invention is as defined in the appended claims.

Accordingly, one object of the present disclosure is to provide a vegetable gum-based soft jelly candy and a preparation method thereof, so that the vegetable gum-based soft jelly candy is more stable in the quality and the "shrinkage" phenomenon is avoided. Another object of the present disclosure is to provide a vegetable gum-based soft jelly candy and a preparation method thereof, so that the "shrinkage" phenomenon does not occur when the soft jelly candy contains sugar alcohols and/or a high content of a functional ingredient.

One aspect of the present disclosure relates to a vegetable gum-based soft jelly candy, which comprises the following components:
a) 30-45 parts by weight of carrageenan,
b) 4-15 parts by weight of agar, and
c) 2-16 parts by weight of Arabic gum,
   the components a), b) and c) together account for 2.37-5.86% by weight based on the total weight of the soft jelly candy minus moisture.

In some embodiments, the vegetable gum-based soft jelly candy further comprises 21-100 parts by weight of a functional ingredient. In some embodiments, the vegetable gum-based soft jelly candy further comprises 1200-1300 parts by weight of a sweetener. In some embodiments, the vegetable gum-based soft jelly candy is sugar-free. In some embodiments, the functional ingredient comprises a nutritional fortifier, wherein the nutritional fortifier is one or more of minerals, vitamins, amino acids and other ingredients beneficial to the human body, and wherein the other ingredients beneficial to the human body are docosahexaenoic acid (DHA), dietary fiber, lecithin and probiotics. In some embodiments, the minerals are selected from the group consisting of calcium, iron, zinc, selenium, magnesium, potassium, sodium, and copper; the vitamins are selected from the group consisting of vitamin A, vitamin D, vitamin E, vitamin C, B vitamins, folic acid, and biotin; the amino acids are selected from the group consisting of taurine and lysine.

In some embodiments, the sweetener is one or more that selected from the group consisting of sorbitol, mannitol, maltitol, isomaltitol, erythritol and xylitol. In some embodiments, the vegetable gum-based soft jelly candy further comprises one or more components selected from the followings: 0-20 parts by weight of a fruit and vegetable juice, 0-20 parts by weight of a sour agent, 0-20 parts by weight of an edible essence and 0-20 parts by weight of a food pigment.

In some embodiments, the vegetable gum-based soft jelly candy comprises each of the following components:
I:
   a) 36-45 parts by weight of carrageenan,
   b) 8-15 parts by weight of agar, and
   c) 8-16 parts by weight of Arabic gum; or
II:
   a) 30-45 parts by weight of carrageenan,
   b) 4-8 parts by weight of agar, and
   c) 2-8 parts by weight of Arabic gum.

Another aspect of the present disclosure relates to a method for preparing the vegetable gum-based soft jelly candy of the present disclosure, comprising mixing homogeneously each of carrageenan, agar and Arabic gum with water.

Another aspect of the present disclosure relates to use of a) carrageenan, b) agar and c) Arabic gum for improving the appearance stability and/or texture of a vegetable gum-based soft jelly candy, which is characterized in that the vegetable gum-based soft jelly candy comprises the following components:
a) 30-45 parts by weight of carrageenan,
b) 4-15 parts by weight of agar, and
c) 2-16 parts by weight of Arabic gum,
wherein the components a), b) and c) together account for 2.37-5.86% by weight based on the total weight of the soft jelly candy minus moisture.

### DESCRIPTION OF THE DRAWINGS

Fig. 1 shows a photograph of the soft jelly candy with different appearances.
Fig. 2 shows exemplary photographs of the soft candies according to examples of the present disclosure. Fig. 2a corresponds to Example 8, and Fig. 2b corresponds to Example 3.
Fig. 3 shows exemplary photographs of soft candies of the comparative example in the present disclosure. Fig. 3a corresponds to Comparative Example 17. Fig. 3b corresponds to Comparative Example 2. Fig. 3c corresponds to Comparative Example 9. Fig. 3d corresponds to Comparative Example 14. Fig. 3e corresponds to Comparative Example 20.

### DETAILED DESCRIPTION OF THE DISCLOSURE

Several aspects of the disclosure are described below with reference to examples to illustrate the present application. It should be understood that numerous specific details, relationships and methods are set forth to provide a thorough understanding of the disclosure. However, one of ordinary skilled person in the relevant art will readily recognize that the disclosure may be practiced without one or more of the specific details or may be practiced in other ways.

### Definition

The terminology used herein is for the purpose of describing particular embodiments only and is not intended to limiting the disclosure. As used herein, the singular forms "a", "an", and "the" are intended to include the plural forms as well, unless otherwise expressly provided herein. In addition, the open-ended expressions "comprise" and "include" are interpreted to mean that they may also contain structural components or method steps that are not mentioned, but it should be noted that the open-ended expressions also cover situations that only consist of the components and methods steps described (that is, covering situations where the close-ended expression "consists of" is used).

As used throughout herein, a range is used as a shorthand form to describe each value and all values within the range. Any numerical value within a range such as an integer value, a value that increases in tenths (when range ends with one decimal place), or a hundredth (when the range ends with two decimal places) can be selected as the ends of the range. For example, the range of 30-45 is used to describe all values within that range, such as 30, 31, 32, 33, 34, 35, 36, 37, 38, 39, 40, 41, 42, 43, 44, and 45 (all integer values), and comprises all subranges defined between any two of the preceding values, such as 30-40, 40-45, 32-42, 35-40, 37-45, etc.

The phrase "within any range defined between any two of the preceding values" as used herein literally means that any range may be selected from any two values listed preceding such phrase, regardless of whether the values are between in a lower part of the list or in a higher part of the list. For example, a pair of values can be selected from two lower values, two higher values, or one lower value and one higher value.

Sugar alcohols are polyols containing two or more hydroxyl groups, but sugar alcohols are different from polyols such as ethylene glycol, propylene glycol, and pentaerythritol synthesized in petrochemical industry. Sugar alcohols can be prepared from corresponding sugars from a wide range of sources. That is, the aldehyde or ketone group on the sugar molecule is reduced to a hydroxyl group to generate a sugar alcohol. For example, glucose is reduced to generate sorbitol. Xylose is reduced to generate xylitol. Maltose is reduced to generate maltitol. Fructose is reduced to generate mannitol. Currently developed sugar alcohols include sorbitol, mannitol, erythritol, maltitol, lactitol, xylitol, etc. These sugar alcohols have high stability under acid or heat and are not prone to Maillard reactions and become low-calorie food sweeteners and are widely used in low-calorie food formulas.

Sugar alcohols are not used by microorganisms in the oral cavity, and do not decrease but increase the oral cavity pH, so that they do not corrode teeth and are good materials for preventing dental caries. Sugar alcohols have no effect on the blood sugar levels in the human body and can provide certain calories for diabetics, and thus can be used as nutritional sweeteners to provide calories for diabetics.

The term "sugar-free" as used herein refers to a food product containing no more than 0.5 gram of carbohydrate (sugar) per 100 grams of a solid food product or 100 milliliters of a liquid food product. The term "low sugar" as used herein refers to a food product containing no more than 5 grams of carbohydrate (sugar) per 100 grams of a solid food product or 100 milliliters of a liquid food product.

Unless otherwise indicated, all parts and percentages used herein are by weight.

Unless otherwise indicated, all technical terms used herein have the meaning commonly understood by one of ordinary skilled person in the art to which this disclosure belongs.

### Soft jelly candy

The soft jelly candy of the present disclosure comprises a) 30-45 parts by weight of carrageenan, b) 4-15 parts by weight of agar, and c) 2-16 parts by weight of Arabic gum, wherein the components a), b) and c) together account for 2.37-5.86% by weight based on the total weight of the soft jelly candy minus moisture.

In some embodiments, carrageenan is present in the soft jelly candy in an amount of 32-45 parts by weight, 34-45 parts by weight, 35-45 parts by weight, 36-45 parts by weight, 38-45 parts by weight, 40-45 parts by weight, 33-43 parts by weight, 35-40 parts by weight or 37-40 parts by weight, or may be present in the soft jelly candy, for example, in an amount within any range defined between any two of the preceding values. In some embodiments, agar is present in the soft jelly candy in an amount of 6-15 parts by weight, 8-15 parts by weight, 10-15 parts by weight, 12-15 parts by weight, 14-15 parts by weight, 5-13 parts by weight, 7-11 parts by weight or 9-15 parts by weight, or may be present in the soft jelly candy, for example, in an amount within any range defined between any two of the preceding values. In some embodiments, Arabic gum is present in the soft jelly candy in an amount of 4-16 parts by weight, 6-16 parts by weight, 8-16 parts by weight, 10-16 parts by weight, 12-16 parts by weight, 14-16 parts by weight, 3-15 parts by weight, 5-13 parts by weight, 7-11 parts by weight or 9-16 parts by weight, or may be present in the soft jelly candy, for example, in an amount within any range defined between any two of the preceding values. Carrageenan, agar, and Arabic gum are edible gums and are common gums in the food field.

In some embodiments, based on the total weight of the soft jelly candy minus moisture, components a), b) and c) together account for 2.37-5.86 wt%, 2.44-5.86 wt%, 2.51-5.86 wt%, 3.00-5.86 wt%, 3.50-5.86 wt%, 4.00-5.86 wt%, 4.50-5.86 wt%, 5.00-5.86 wt%, 5.50-5.86 wt%, or any range defined between any two of the preceding values.

In some embodiments, the soft jelly candy further comprises 21-100 parts by weight of a functional ingredient, such as 30-100 parts by weight, 40-100 parts by weight, 50-100 parts by weight, 60-100 parts by weight, 70-100 parts by weight, 80-100 parts by weight, 90-100 parts by weight, or within any range defined between any two of the preceding values. In some embodiments, the functional ingredient comprises a nutritional fortifier, wherein the nutritional fortifier is one or more of minerals, vitamins, amino acids and other ingredients beneficial to the human body, and wherein the other ingredients beneficial to the human body are docosahexaenoic acid (DHA), dietary fiber, lecithin and probiotics. In some embodiments, the minerals are selected from the group consisting of calcium, iron, zinc, selenium, magnesium, potassium, sodium, and copper; the vitamins are selected from the group consisting of vitamin A, vitamin D, vitamin E, vitamin C, B vitamins, folic acid, and biotin; the amino acids are selected from the group consisting of taurine and lysine.

In some embodiments, the soft jelly candy further comprises 1200-1300 parts by weight of a sweetener, such as 1220-1300 parts by weight, 1240-1300 parts by weight, 1260-1300 parts by weight, 1280-1300 parts by weight, or any range defined between any two of the preceding values. In some embodiments, the sweetener is one or more that selected from the group consisting of sorbitol, mannitol, maltitol, isomaltitol, erythritol and xylitol.

In some embodiments, the soft jelly candy further comprises one or more components selected from: 0-20 parts by weight (such as 0-15 parts by weight, 0-10 parts by weight, 0-8 parts by weight, 0-6 parts by weight, 0-4 parts by weight, 0-2 parts by weight, 1-5 parts by weight, 6-15 parts by weight, 8-15 parts by weight or any range defined between any two of the preceding values) of a fruit and vegetable juice, 0-20 parts by weight (such as 0-15 parts by weight, 0-10 parts by weight, 0-8 parts by weight, 0-6 parts by weight, 0-4 parts by weight, 0-2 parts by weight, 1-5 parts by weight, 6-15 parts by weight, 8-15 parts by weight or any range defined between any two of the preceding values) of a sour agent, 0-20 parts by weight (such as 0-15 parts by weight, 0-10 parts by weight, 0-8 parts by weight, 0-6 parts by weight, 0-4 parts by weight, 0-2 parts by weight, 1-5 parts by weight, 6-15 parts by weight, 8-15 parts by weight or any range defined between any two of the preceding values) of an edible essence and 0-20 parts by weight (such as 0-15 parts by weight, 0-10 parts by weight, 0-8 parts by weight, 0-6 parts by weight, 0-4 parts by weight, 0-2 parts by weight, 1- 5 parts by weight, 6-15 parts by weight, 8-15 parts by weight or any range defined between any two of the preceding values) of a food pigment.

In some embodiments, the fruit and vegetable juice is concentrated juices of various fruits, such as strawberry, apple, grape, sweet orange, pineapple, mango, peach, pear, watermelon, pomegranate, durian, grapefruit and others, or a mixture of one or more.

In some embodiments, the sour agent is one or a mixture of two or more of citric acid, malic acid, sodium citrate, lactic acid, tartaric acid, and fumaric acid.

In some embodiments, the edible essence is food essence, for example, one or more selected from the followings: orange essence, lemon essence, strawberry essence, raspberry essence, blueberry essence, peach essence, cola essence, cherry essence, banana essence, pear essence, black carrot essence, complex berry essence, grape essence, Chinese-date essence, lychee essence, Lycium barbarum essence, pomegranate essence, blackcurrant essence, carrot essence, raspberry essence, noni essence, ebony essence, fermented fruit and vegetable essence, cranberry essence, green plum essence, sea buckthorn essence, kiwi essence, mango essence, mixed fruit essence, cucumber essence, caramel essence, coffee essence and honey essence. In some embodiments, the food pigment is selected from one or more of the followings: annatto, carmine, beta carotene, turmeric, caramel, titanium dioxide, lemon yellow, brilliant blue, allure red, chili red, grape skin red, red yeast rice, beet red, gardenia blue, gardenia yellow, radish red, sunset yellow, sodium copper chlorophyllin, iron oxide, safflower yellow, amaranth red, erythrosine, indigo, new red, vegetable carbon black and lutein.

In some embodiments, the vitamins are selected from the group consisting of vitamin A, vitamin D, vitamin E, vitamin C, B vitamins, folic acid, and biotin. ; the minerals are selected from the group consisting of calcium, iron, zinc, selenium, magnesium, potassium, sodium, and copper; the amino acids are selected from the group consisting of taurine and lysine.

### Preparation method

The soft jelly candy of the present disclosure can be prepared as follows:

### (1) Preparation of gum solution

Each of carrageenan, agar, Arabic gum are mixed with water homogeneously and fully dissolved for future use.

### (2) Preparation of sugar liquid

Sugar alcohol is mixed with an appropriate amount of purified water, heated until it is completely dissolved, then the above-mentioned gum solution is added, then the resulting solution is cooked and concentrated until the solid content is 60%-90%. Optional aeration can be performed here.

### (3) Blending

The sugar liquid (2) is blended homogeneously with a functional ingredient, an optional edible essence, an optional concentrated fruit juice, an optional food pigment, an optional sour agent, etc. which are weighed, to obtain the formulated material liquid. Optionally, air bubbles can be removed here.

### (4) Casting molding

The formulated material liquid is placed in the reservoir box of the casting machine, kept at 60 °C - 100 °C, and casted. The molding process adopts starch compression molding or blister cooling molding.

### (5) Drying or cooling

Drying or cooling are performed according to the moisture content. For drying: the obtained soft candy is dried at a drying temperature of 10-50 °C and a relative humidity of 10%-70% RH. For cooling: the obtained soft candy is cooled at a drying temperature of -10 - 20 °C.

### (6) Demolding and post-processing

The dried soft candy is demolded, polished or mixed with sand-like substance to obtain a functional soft candy.

### Method for improving appearance stability and/or texture

There are some issues in current vegetable gum-based soft jelly candy products, among which the most prominent issue is that they are prone to "shrinkage" (specifically, the texture is destroyed, like shrinkage and damage to a sponge, see Fig. 1) during the shelf life. This issue is particularly serious for a vegetable gum-based soft jelly candy containing a high content of a functional ingredient (≥ 1% by weight of functional vitamins, minerals, oils, etc.). In addition, the "shrinkage" phenomenon in a vegetable gum-based soft jelly candy comprising sugar alcohols is also particularly serious. Accordingly, in one aspect, the present disclosure relates to the use of a) carrageenan, b) agar and c) Arabic gum for improving the appearance stability and/or texture of a vegetable gum-based soft jelly candy, which is characterized in that the vegetable gum-based soft jelly candy comprises the following components: a) carrageenan, b) agar and c) Arabic gum, wherein the a) carrageenan, b) agar and c) Arabic gum are as defined in the present disclosure in the "soft jelly candy" section. In some embodiments, the soft jelly candy may comprise other ingredients as defined in the "soft jelly candy" section of the present disclosure, such as a functional ingredient, a sweetener, a fruit and vegetable juice, a sour agent, an edible essence, and an edible pigment.

While various embodiments of the present disclosure have been described above, it should be understood that they are provided by way of example only and not limitation. Many changes to the disclosed embodiments can be made in accordance with the disclosure herein without departing from the spirit or scope of the disclosure. Accordingly, the breadth and scope of the present disclosure should not be limited by any of the above-described embodiments.

### EXAMPLES

Unless otherwise indicated, the materials used in the examples herein are all commercially available, and the various specific experimental methods used to perform the experiments are conventional experimental methods in the art or according to the steps and conditions recommended by the manufacturer, and it can be routinely determined as required by those skilled in the art.

### 1. Method

### 1.1 Preparation process of a soft jelly candy

All examples and comparative examples are prepared using the following process:

### (1) Preparation of a gum solution

Each of carrageenan, agar, Arabic gum were mixed with water homogeneously to be fully dissolved for future use.

### (2) Preparation of a sugar liquid

A sweetener was mixed with an appropriate amount of purified water, heated until it was completely dissolved, then the above-mentioned gum solution was added, and then the resulting solution was cooked and concentrated until the solid content was 85%, kept warm for future use.

### (3) Blending

The sugar liquid (2) was blended homogeneously together with an edible essence, a concentrated fruit juice, a functional ingredient, a food pigment and a sour agent which were weighed (in addition to the ingredients listed in Tables 1-7 below, all examples and comparative examples further contain 5 parts of grapefruit concentrate juice, 5 parts of citric acid, 5 parts of lemon essence and 5 parts of annatto) to obtain the formulated material liquid. Optionally, air bubbles can be removed here.

### (4) Casting molding

The formulated material liquid was placed in the reservoir box of the casting machine, kept at 95 °C, and casted. The molding process adopts starch compression molding or blister cooling molding.

### (5) Drying

For starch compression molding, the obtained soft candy was dried at a drying temperature of 45 °C and a relative humidity of 50% RH.

### (6) Demolding and post-processing

The dried soft candy was demolded, polished or mixed with sand-like substance to obtain a functional soft candy.

### 1.2 Texture test

The prepared soft candy was subjected to a texture test using the SMS TA XT plus texture analyzer according to the TPA (texture profile analysis) method. The test was performed under the following test conditions: pre-test speed: 1 mm/s, test speed: 1 mm/s, post-test speed: 1 mm/s, trigger force: 8 g, target mode: deformation 50%.

Each sample was taken for testing, in which the finished product specification and shape were controlled to be consistent, cylindrical, 4.0 g/grain, weight deviation of no more than 0.1 g. Each group of samples was tested in parallel for 6 times, and the average value was taken as the texture test result.

The same batch of samples (which had not been tested) was bottled and sealed, placed at 25±2 °C, and assayed in a 40-80% humidity environment for 12 months. Elasticity and hardness were measured again.

$Hardness retention rate = measured value at 12 months / 0 month$

$Elastic retention rate = measured value at 12 months / 0 month .$

### 2. The formulas and results of each example and comparative example

**Table 1: Formulas of Examples 1-6 (unit: parts by weight, where the amount of water is the initial content, DHA algal oil contains ≥ 40% of DHA) and texture test results**

| **Exampl e** | **Carrageena n (3243C)** | **Agar (1000g /cm²)** | **Arabi c gum (SC10 )** | **Maltose P200** | **DHA algal oil (40%)** | **Purified water** | **Hardness retention rate** | **Elastic retentio n rate** |
|---|---|---|---|---|---|---|---|---|
| 1 | 45 | 4 | 2 | 1200 | 21 | 675 | 105% | 90% |
| 2 | 45 | 15 | 16 | 1300 | 50 | 765 | 94% | 95% |
| 3 | 36 | 8 | 8 | 1200 | 100 | 612 | 97% | 94% |
| 4 | 36 | 8 | 8 | 1300 | 21 | 612 | 92% | 93% |
| 5 | 30 | 4 | 2 | 1200 | 50 | 510 | 103% | 90% |
| 6 | 30 | 15 | 16 | 1300 | 100 | 765 | 105% | 90% |

**Table 2: Formulas of Examples 7-9 (unit: parts by weight, where the amount of water is the initial content, DHA algal oil contains ≥ 40% of DHA) and texture test results**

| **Example** | **Carrageenan (3243C)** | **Agar (1000g/ cm²)** | **Arabic gum (SC10)** | **Maltose P200** | **DHA algal oil (40%)** | **Purified water** | **Hardness retention rate** | **Elastic retention rate** |
|---|---|---|---|---|---|---|---|---|
| 7 | 45 | 4 | 2 | 1200 | 20 | 765 | 95% | 96% |
| 8 | 36 | 8 | 8 | 1300 | 18 | 612 | 97% | 97% |
| 9 | 30 | 4 | 2 | 1200 | 16 | 510 | 97% | 95% |

**Table 3: Formulas of Comparative Examples 1-6 (unit: parts by weight, where the amount of water is the initial content, DHA algal oil contains ≥ 40% of DHA) and texture test results**

| **Comparative Example** | **Carrageenan (3243C)** | **Agar (1000g/cm²)** | **Arabic gum (SC10)** | **Maltose P200** | **DHA algal oil (40%)** | **Purified water** | **Hardness retention rate** | **Elastic retention rate** |
|---|---|---|---|---|---|---|---|---|
| 1 | 45 | 0 | 2 | 1200 | 21 | 765 | 69% | 76% |
| 2 | 45 | 0 | 16 | 1300 | 50 | 765 | 69% | 77% |
| 3 | 36 | 0 | 8 | 1200 | 100 | 612 | 67% | 74% |
| 4 | 36 | 0 | 8 | 1300 | 21 | 612 | 64% | 71% |
| 5 | 30 | 0 | 2 | 1200 | 50 | 510 | 62% | 69% |
| 6 | 30 | 0 | 16 | 1300 | 100 | 510 | 67% | 67% |

**Table 4: Formulas of Comparative Examples 7-12 (unit: parts by weight, where the amount of water is the initial content, DHA algal oil contains ≥ 40% of DHA) and texture test results**

| **Comparative Example** | **Carrageenan (3243C)** | **Agar (1000g/cm²)** | **Arabic gum (SC10)** | **Maltose P200** | **DHA algal oil (40%)** | **Purified water** | **Hardness retention rate** | **Elastic retention rate** |
|---|---|---|---|---|---|---|---|---|
| 7 | 45 | 4 | 0 | 1200 | 21 | 765 | 64% | 74% |
| 8 | 45 | 15 | 0 | 1300 | 50 | 765 | 62% | 77% |
| 9 | 36 | 8 | 0 | 1200 | 100 | 612 | 67% | 74% |
| 10 | 36 | 8 | 0 | 1300 | 21 | 612 | 64% | 71% |
| 11 | 30 | 4 | 0 | 1200 | 50 | 510 | 62% | 64% |
| 12 | 30 | 15 | 0 | 1300 | 100 | 510 | 61% | 67% |

**Table 5: Formulas of Comparative Examples 13-15 (unit: parts by weight, where the amount of water is the initial content, DHA algal oil contains ≥ 40% of DHA) and texture test results**

| **Comparative Example** | **Carrageenan (3243C)** | **Agar (1000g/cm²)** | **Arabic gum (SC10)** | **Maltose P200** | **DHA algal oil (40%)** | **Purified water** | **Hardness retention rate** | **Elastic Retention rate** |
|---|---|---|---|---|---|---|---|---|
| 13 | 30 | 3 | 2 | 1200 | 50 | 510 | 79% | 66% |
| 14 | 36 | 20 | 8 | 1300 | 21 | 612 | 73% | 67% |
| 15 | 45 | 3 | 16 | 1300 | 50 | 765 | 67% | 64% |

**Table 6: Formulas of Comparative Examples 16-18 (unit: parts by weight, where the amount of water is the initial content, DHA algal oil contains ≥ 40% of DHA) and texture test results**

| **Comparative Example** | **Carrageenan (3243C)** | **Agar (1000g/cm²)** | **Arabic gum (SC10)** | **Maltose P200** | **DHA algal oil (40%)** | **Purified water** | **Hardness retention rate** | **Elastic retenti on rate** |
|---|---|---|---|---|---|---|---|---|
| 16 | 30 | 4 | 1 | 1200 | 50 | 510 | 79% | 74% |
| 17 | 36 | 8 | 25 | 1200 | 100 | 612 | 72% | 87% |
| 18 | 45 | 15 | 1 | 1300 | 50 | 765 | 77% | 74% |

**Table 7: Formulas of Comparative Examples 19-22 (unit: parts by weight, where the amount of water is the initial content, DHA algal oil contains ≥ 40% of DHA) and texture test results**

| **Compar ative Example** | **Carrage enan (3243C)** | **Agar (1000g/c m²)** | **Arabic gum (SC10)** | **Maltose P200** | **DHA algal oil (40%)** | **Purifie d water** | **Hardness retention rate** | **Elastic retentio n rate** |
|---|---|---|---|---|---|---|---|---|
| 19 | 45 | 2 | 1 | 1200 | 21 | 675 | 54% | 64% |
| 20 | 45 | 20 | 22 | 1300 | 50 | 765 | 62% | 57% |
| 21 | 36 | 2 | 1 | 1200 | 100 | 612 | 57% | 54% |
| 22 | 30 | 2 | 1 | 1200 | 50 | 510 | 52% | 60% |

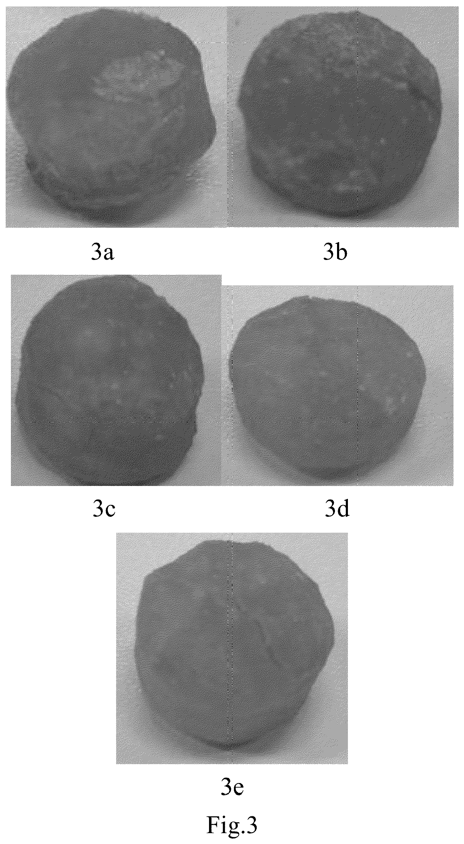

From Tables 1-7 and Figs 2-3, it can be seen that when the gum of the present disclosure contains a specified amount of carrageenan, agar and and Arabic gum and, the resulting soft jelly candy product will not "shrink" during the shelf life, and the product has good texture retention. In addition, the soft jelly candy product of the present disclosure will not "shrink" even when it contains a high content of functional ingredients and contains sugar alcohols.

## Claims

1. A vegetable gum-based soft jelly candy, **characterized in that** the vegetable gum-based soft jelly candy comprises the following components:
a) 30-45 parts by weight of carrageenan,
b) 4-15 parts by weight of agar, and
c) 2-16 parts by weight of Arabic gum,
wherein the components a), b) and c) together account for 2.37-5.86% by weight based on the total weight of the soft jelly candy minus moisture.

2. The vegetable gum-based soft jelly candy according to claim 1, **characterized in that** the vegetable gum-based soft jelly candy further comprises 21-100 parts by weight of a functional ingredient.

3. The vegetable gum-based soft jelly candy according to claim 1 or 2, **characterized in that** the vegetable gum-based soft jelly candy further comprises 1200-1300 parts by weight of a sweetener.

4. The vegetable gum-based soft jelly candy according to claim 1 or 2, **characterized in that** the vegetable gum-based soft jelly candy is sugar-free.

5. The vegetable gum-based soft jelly candy according to claim 2, **characterized in that** the functional ingredient comprises a nutritional fortifier wherein the nutritional fortifier is one or more of minerals, vitamins, amino acids and other ingredients beneficial to the human body, and wherein the other ingredients beneficial to the human body are docosahexaenoic acid (DHA), dietary fiber, lecithin and probiotics.

6. The vegetable gum-based soft jelly candy according to claim 3, **characterized in that** the sweetener is one or more selected from the group consisting of sorbitol, mannitol, maltitol, isomaltitol, erythritol and xylitol.

7. The vegetable gum-based soft jelly candy according to claim 1 or 2, **characterized in that** the vegetable gum-based soft jelly candy further comprises one or more components selected from 0-20 parts by weight of a fruit and vegetable juice, 0-20 parts by weight of a sour agent, 0-20 parts by weight of an edible essence and 0-20 parts by weight of a food pigment.

8. The vegetable gum-based soft jelly candy according to claim 1 or 2, **characterized in that** the vegetable gum-based soft jelly candy comprises the following components:
I:
a) 36-45 parts by weight of carrageenan,
b) 8-15 parts by weight of agar, and
c) 8-16 parts by weight of Arabic gum; or
II:
a) 30-45 parts by weight of carrageenan,
b) 4-8 parts by weight of agar, and
c) 2-8 parts by weight of Arabic gum.

9. The vegetable gum-based soft jelly candy according to claim 5, **characterized in that** the minerals are selected from the group consisting of calcium, iron, zinc, selenium, magnesium, potassium, sodium, and copper; the vitamins are selected from the group consisting of vitamin A, vitamin D, vitamin E, vitamin C, B vitamins, folic acid, and biotin; the amino acids are selected from the group consisting of taurine and lysine.

10. A method for preparing the vegetable gum-based soft jelly candy according to any one of claims 1 to 9, **characterized in that** the method comprises homogeneously mixing each of carrageenan, agar and Arabic gum with water.

11. Use of a) carrageenan, b) agar and c) Arabic gum for improving the appearance stability and/or texture of a vegetable gum-based soft jelly candy, which is **characterized in that** the vegetable gum-based soft jelly candy comprises the following components:
a) 30-45 parts by weight of carrageenan,
b) 4-15 parts by weight of agar, and
c) 2-16 parts by weight of Arabic gum,
wherein the components a), b) and c) together account for 2.37-5.86% by weight based on the total weight of the soft jelly candy minus moisture.

## Patentansprüche

1. Weiches Geleebonbon auf pflanzlicher Gummibasis, **dadurch gekennzeichnet, dass** es folgende Komponenten enthält:
a) 30-45 Gewichtsteile Carrageen,
b) 4-15 Gewichtsteile Agar-Agar und
c) 2-16 Gewichtsteile Gummi arabicum,
wobei die Komponenten a), b) und c) zusammen 2,37-5,86 Gewichtsprozent, bezogen auf das Gesamtgewicht des weichen Geleebonbons abzüglich Feuchtigkeit, ausmachen.

2. Das weiche Geleebonbon auf pflanzlicher Gummibasis nach Anspruch 1, **dadurch gekennzeichnet, dass** das weiche Geleebonbon auf pflanzlicher Gummibasis zusätzlich 21 bis 100 Gewichtsteile einer funktionellen Zutat enthält.

3. Das weiche Geleebonbon auf pflanzlicher Gummibasis nach Anspruch 1 oder 2, **dadurch gekennzeichnet, dass** das weiche Geleebonbon auf pflanzlicher Gummibasis zusätzlich 1200 bis 1300 Gewichtsteile eines Süßungsmittels enthält.

4. Das weiche Geleebonbon auf pflanzlicher Gummibasis nach Anspruch 1 oder 2, **dadurch gekennzeichnet, dass** das weiche Geleebonbon auf pflanzlicher Gummibasis zuckerfrei ist.

5. Das weiche Geleebonbon auf pflanzlicher Gummibasis nach Anspruch 2, **dadurch gekennzeichnet, dass** die funktionelle Zutat einen Nährstoff-Anreicherer umfasst, wobei der Nährstoff-Anreicherer aus einem oder mehreren der folgenden Stoffe besteht: Mineralstoffe, Vitamine, Aminosäuren und andere für den menschlichen Körper vorteilhafte Inhaltsstoffe und wobei die anderen für den menschlichen Körper vorteilhaften Inhaltsstoffen Docosahexaensäure (DHA), Ballaststoffe, Lecithin und Probiotika sind.

6. Das weiche Geleebonbon auf pflanzlicher Gummibasis nach Anspruch 3, **dadurch gekennzeichnet, dass** der Süßstoff aus einem oder mehreren der folgenden Stoffe ausgewählt ist: Sorbit, Mannit, Maltit, Isomaltit, Erythrit und Xylit.

7. Das weiche Geleebonbon auf pflanzlicher Basis nach Anspruch 1 oder 2, **dadurch gekennzeichnet, dass** das weiche Geleebonbon auf pflanzlicher Basis zusätzlich eine oder mehrere Komponenten enthält, ausgewählt aus 0 bis 20 Gewichtsteilen Frucht- und Gemüsesaft, 0 bis 20 Gewichtsteilen Säuerungsmittel, 0 bis 20 Gewichtsteilen essbarem Aroma und 0 bis 20 Gewichtsteilen Lebensmittelfarbstoff.

8. Das weiche Geleebonbon auf pflanzlicher Basis nach Anspruch 1 oder 2, **dadurch gekennzeichnet, dass** das weiche Geleebonbon auf pflanzlicher Basis die folgenden Komponenten enthält:
I:
a) 36-45 Gewichtsteile Carrageen,
b) 8-15 Gewichtsteile Agar-Agar und
c) 8-16 Gewichtsteile Gummi arabicum; oder
II:
a) 30-45 Gewichtsteile Carrageen,
b) 4-8 Gewichtsteile Agar-Agar und
c) 2-8 Gewichtsteile Gummi arabicum.

9. Das weiche Geleebonbon auf pflanzlicher Basis nach Anspruch 5, **dadurch gekennzeichnet, dass** die Mineralstoffe ausgewählt sind aus der Gruppe bestehend aus Calcium, Eisen, Zink, Selen, Magnesium, Kalium, Natrium und Kupfer; die Vitamine ausgewählt sind aus der Gruppe bestehend aus Vitamin A, Vitamin D, Vitamin E, Vitamin C, B-Vitaminen, Folsäure und Biotin; die Aminosäuren ausgewählt sind aus der Gruppe bestehend aus Taurin und Lysin.

10. Verfahren zur Herstellung des weichen Geleebonbon auf pflanzlicher Gummibasis nach einem der Ansprüche 1 bis 9, **dadurch gekennzeichnet, dass** das Verfahren das homogene Vermischen von Carrageen, Agar-Agar und Gummi arabicum mit Wasser umfasst.

11. Verwendung von a) Carrageen, b) Agar-Agar und c) Gummi arabicum zur Verbesserung der Aussehens-Stabilität und/oder Textur eines weichen Geleebonbons auf pflanzlicher Gummibasis, das **dadurch gekennzeichnet ist, dass** das weiche Geleebonbons auf pflanzlicher Gummibasis folgende Komponenten enthält:
a) 30-45 Gewichtsteile Carrageen,
b) 4-15 Gewichtsteile Agar-Agar und
c) 2-16 Gewichtsteile Gummi arabicum,
wobei die Komponenten a), b) und c) zusammen 2,37-5,86 Gewichtsprozent, bezogen auf das Gesamtgewicht des weichen Geleebonbons abzüglich Feuchtigkeit, ausmachen.

## Revendications

1. Bonbon gélifié mou à base de gomme végétale, **caractérisé en ce que** le bonbon gélifié mou à base de gomme végétale comprend les composants suivants :
a) 30 à 45 parties en poids de carraghénane,
b) 4 à 15 parties en poids d'agar-agar, et
c) 2 à 16 parties en poids de gomme arabique,
dans lequel les composants a), b) et c) comptent ensemble pour 2,37 à 5,86 % en poids par rapport au poids total du bonbon gélifié mou à base de gomme végétale moins l'humidité.

2. Bonbon gélifié mou à base de gomme végétale selon la revendication 1, **caractérisé en ce que** le bonbon gélifié mou à base de gomme végétale comprend en outre 21 à 100 parties en poids d'un ingrédient fonctionnel.

3. Bonbon gélifié mou à base de gomme végétale selon la revendication 1 ou 2, **caractérisé en ce que** le bonbon gélifié mou à base de gomme végétale comprend en outre 1 200 à 1 300 parties en poids d'un édulcorant.

4. Bonbon gélifié mou à base de gomme végétale selon la revendication 1 ou 2, **caractérisé en ce que** le bonbon gélifié mou à base de gomme végétale est sans sucre.

5. Bonbon gélifié mou à base de gomme végétale selon la revendication 2, **caractérisé en ce que** l'ingrédient fonctionnel comprend un fortifiant nutritionnel, dans lequel le fortifiant nutritionnel est un ou plusieurs parmi les minéraux, les vitamines, les acides aminés et d'autres ingrédients bénéfiques pour le corps humain, et dans lequel les autres ingrédients bénéfiques pour le corps humain sont l'acide docosahexaénoïque (DHA), les fibres alimentaires, la lécithine et les probiotiques.

6. Bonbon gélifié mou à base de gomme végétale selon la revendication 3, **caractérisé en ce que** l'édulcorant est un ou plusieurs choisis dans le groupe constitué par le sorbitol, le mannitol, le maltitol, l'isomaltitol, l'érythritol et le xylitol.

7. Bonbon gélifié mou à base de gomme végétale selon la revendication 1 ou 2, **caractérisé en ce que** le bonbon gélifié mou à base de gomme végétale comprend en outre un ou plusieurs composants choisis parmi 0 à 20 parties en poids d'un jus de fruits et de légumes, 0 à 20 parties en poids d'un agent acidulant, 0 à 20 parties en poids d'un arôme comestible et 0 à 20 parties en poids d'un pigment alimentaire.

8. Bonbon gélifié mou à base de gomme végétale selon la revendication 1 ou 2, **caractérisé en ce que** le bonbon gélifié mou à base de gomme végétale comprend les composants suivants :
I :
a) 36 à 45 parties en poids de carraghénane,
b) 8 à 15 parties en poids d'agar-agar, et
c) 8 à 16 parties en poids de gomme arabique ; ou
II :
a) 30 à 45 parties en poids de carraghénane,
b) 4 à 8 parties en poids d'agar-agar, et
c) 2 à 8 parties en poids de gomme arabique.

9. Bonbon gélifié mou à base de gomme végétale selon la revendication 5, **caractérisé en ce que** les minéraux sont choisis dans le groupe constitué par le calcium, le fer, le zinc, le sélénium, le magnésium, le potassium, le sodium et le cuivre ; les vitamines sont choisies dans le groupe constitué par la vitamine A, la vitamine D, la vitamine E, la vitamine C, les vitamines B, l'acide folique et la biotine ; les acides aminés sont choisis dans le groupe constitué par la taurine et la lysine.

10. Méthode pour préparer le bonbon gélifié mou à base de gomme végétale selon l'une quelconque des revendications 1 à 9, **caractérisée en ce que** la méthode comprend le mélange homogène de chacun parmi la carraghénane, l'agar-agar et la gomme arabique avec de l'eau.

11. Utilisation de a) carraghénane, b) agar-agar et c) gomme arabique pour améliorer la stabilité de l'aspect et/ou la texture d'un bonbon gélifié mou à base de gomme végétale, qui est **caractérisée en ce que** le bonbon gélifié mou à base de gomme végétale comprend les composants suivants :
a) 30 à 45 parties en poids de carraghénane,
b) 4 à 15 parties en poids d'agar-agar, et
c) 2 à 16 parties en poids de gomme arabique,
dans laquelle les composants a), b) et c) comptent ensemble pour 2,37 à 5,86 % en poids par rapport au poids total du bonbon gélifié mou à base de gomme végétale moins l'humidité.
